# EUROPEAN PATENT APPLICATION

(11) **EP 4 787 608 A1**
(43) Date of publication of application: **05.08.2026**
(21) Application number: 24870403.3
(22) Date of filing: 06.09.2024
(51) Int. Cl.: H01M 50/538, H01M 50/531, H01M 10/0587

(54) **ELECTRODE SHEET, WOUND BATTERY CELL, CYLINDRICAL BATTERY, AND ELECTRIC DEVICE**

(30) Priority: 28.09.2023 CN 202322680595 U
(71) Applicant: BYD Company Limited, Shenzhen, Guangdong 518118 (CN)
(72) Inventor: YAO, Lyuhua, Shenzhen, Guangdong 518118 (CN); WANG, Jianjun, Shenzhen, Guangdong 518118 (CN); LEI, Lei, Shenzhen, Guangdong 518118 (CN)
(74) Representative: Mathys & Squire
(86) International application number: PCT/CN2024/117368
(87) International publication number: WO 2025/066857

(57) **Abstract**

Disclosed are an electrode sheet, a wound cell, a cylindrical battery and a power-consuming apparatus. The electrode sheet includes: a body (10). The body (10) includes a coated part (1) and a tab part (2) in a width direction of the body (10). The tab part (2) includes a plurality of tabs (23) disposed in a length direction of the body (10), and each of the tabs (23) is connected to the coated part (1). Two ends of the body (10) in the length direction are a first end (3) and a second end (4). The tab part (2) includes a first region (21) located at the first end (3) in a direction from the first end (3) to the second end (4). A plurality of tabs (23) located in the first region (21) are all first tabs (211). In the direction from the first end (3) to the second end (4), widths of the plurality of first tabs (211) in the length direction of the body (10) gradually decrease.

## Description

### CROSS-REFERENCE TO RELATED APPLICATIONS

This application claims priority to Chinese Patent Application No. 2023226805957, filed on September 28, 2023, which is incorporated herein by reference in its entirety.

### TECHNICAL FIELD

This application relates to the field of battery technologies, and in particular, to an electrode sheet, a wound cell, a cylindrical battery, and a power-consuming apparatus.

### BACKGROUND

Cylindrical batteries are widely used, and winding an electrode sheet is a commonly used production method for cells of the cylindrical batteries. After the electrode sheet is wound, tabs are flattened and then welded to a current collector plate. In related technologies, to prevent interference between the tabs and a winding mandrel during winding, the tab disposed at an initial section of an electrode sheet is difficult to bend due to its size, thereby reducing production efficiency. Additionally, reducing the size may adversely affect the current-carrying capability of a wound cell.

### SUMMARY

This application is intended to resolve at least one of technical problems existing in a conventional technology. Therefore, this application provides an electrode sheet. The electrode sheet ensures current-carrying capability of a wound cell, and improves overall bending degree of first tabs in a first region, thereby improving production efficiency.

This application further provides a wound cell having the foregoing electrode sheet.

This application further provides a cylindrical battery having the foregoing wound cell.

This application further provides a power-consuming apparatus having the foregoing cylindrical battery.

An electrode sheet according to an embodiment of this application includes a body. The body includes a coated part and a tab part in a width direction of the body. The tab part includes a plurality of tabs disposed in a length direction of the body, and each of the tabs is connected to the coated part. Two ends of the body in the length direction are a first end and a second end. The tab part includes a first region located at the first end in a direction from the first end to the second end. A plurality of tabs located in the first region are all first tabs. In the direction from the first end to the second end, widths of the plurality of first tabs in the length direction of the body gradually decrease.

In the electrode sheet in this embodiment of this application, the plurality of first tabs are disposed in the first region. The two ends of the body in the length direction are the first end and the second end. The first region is located at the first end. In the direction from the first end to the second end, the widths of the plurality of first tabs in the length direction of the body gradually decrease. This ensures a current-carrying capability of a wound cell, and improves an overall bending degree of the first tabs in the first region, thereby improving production efficiency.

In some embodiments of this application, in the direction from the first end to the second end, the widths of the plurality of first tabs in the length direction of the body linearly decrease.

In some embodiments of this application, a width of a first tab closest to the first end in the length direction of the body ranges from 10 mm to 100 mm.

In some embodiments of this application, a distance between the first end and the first tab closest to the first end ranges from 0 mm to 1 mm.

In some embodiments of this application, in the direction from the first end to the second end, heights of the plurality of first tabs in the width direction of the body gradually increase.

In some embodiments of this application, the first tabs are inclined toward the second end in a direction from the coated part to the tab part.

In some embodiments of this application, in the direction from the coated part to the tab part, two opposite edges of the first tab in the length direction of the body are both inclined toward the second end at a same inclination angle.

In some embodiments of this application, in the direction from the first end to the second end, an edge at one end of the first tab that is away from the coated part is inclined toward a direction away from the coated part.

In some embodiments of this application, an angle between the length direction of the body and an edge of two opposite edges of the first tab in the length direction of the body that is close to the first end is a first angle; and first angles of the plurality of first tabs in the direction from the first end to the second end gradually increases.

In some embodiments of this application, a first angle of the first tab closest to the first end ranges from 20° to 30°.

In some embodiments of this application, the first angles of the plurality of first tabs in the direction from the first end to the second end increase linearly.

In some embodiments of this application, a difference between first angles of two adjacent first tabs ranges from 0.1° to 5°.

In some embodiments of this application, an edge at one end of the first tab that is away from the coated part is parallel to the length direction of the body.

In some embodiments of this application, an angle between the length direction of the body and an edge of two opposite edges of the first tab in the length direction of the body that is close to the first end is a first angle; and first angles of the plurality of first tabs in the direction from the first end to the second end are equal.

In some embodiments of this application, in the direction from the first end to the second end, heights of the plurality of first tabs in the width direction of the body increase linearly.

In some embodiments of this application, a height of the first tab closest to the first end in the width direction of the body ranges from 0.5 mm to 1.5 mm.

In some embodiments of this application, a difference between heights of two adjacent first tabs in the width direction of the body ranges from 0.05 mm to 0.5 mm.

In some embodiments of this application, the tab part further includes a second region, the second region is located on a side of the first region that is close to the second end, a plurality of tabs located in the second region are all second tabs, and the plurality of second tabs have the same shape and size.

In some embodiments of this application, a width of the second tab in the length direction of the body ranges from 2 mm to 6 mm; and/or a height of the second tab in the width direction of the body ranges from 4 mm to 8 mm.

In some embodiments of this application, the second tabs are inclined toward the second end in a direction from the coated part to the tab part.

In some embodiments of this application, an angle between the length direction of the body and an edge of two opposite edges of the second tab in the length direction of the body that is close to the first end ranges from 2° to 20°.

In some embodiments of this application, in the length direction of the body, a maximum width of the first tab is less than or equal to 20 times a width of the second tab.

In some embodiments of this application, in the length direction of the body, a spacing between edges of two adjacent tabs that are close to each other in the length direction of the body ranges from 0.05 mm to 2 mm.

In some embodiments of this application, the body further includes an uncoated foil buffer part in the width direction of the body, and the uncoated foil buffer part is located between the coated part and the tab part.

A wound cell according to an embodiment of this application includes: a positive electrode sheet, a negative electrode sheet, and a separator. The positive electrode sheet and the negative electrode sheet are stacked and wound in a length direction of the positive electrode sheet and the negative electrode sheet. The separator is disposed between the positive electrode sheet and the negative electrode sheet. At least one of the positive electrode sheet and the negative electrode sheet is the electrode sheet. A mandrel hole is provided inside the wound cell, the first end is disposed close to the mandrel hole relative to the second end, and the tab bends toward the mandrel hole.

In the wound cell according to an embodiment of this application, the foregoing electrode sheet is disposed, and the plurality of first tabs are disposed in the first region. The two ends of the body in the length direction are the first end and the second end. The first region is located at the first end. In the direction from the first end to the second end, the widths of the plurality of first tabs in the length direction of the body gradually decrease. This ensures the current-carrying capability of the wound cell, and improves an overall bending degree of the first tabs in the first region, thereby improving production efficiency.

In some embodiments of this application, edges at one ends of the plurality of first tabs that face the mandrel hole are flush with each other.

A cylindrical battery according to an embodiment of this application includes the foregoing wound cell.

In the cylindrical battery according to this embodiment of this application, the foregoing wound cell is disposed, the foregoing electrode sheet is disposed, and the plurality of first tabs are disposed in the first region. The two ends of the body in the length direction are the first end and the second end. The first region is located at the first end. In the direction from the first end to the second end, the widths of the plurality of first tabs in the length direction of the body gradually decrease. This ensures the current-carrying capability of the wound cell, and improves an overall bending degree of the first tabs in the first region, thereby improving production efficiency.

A power-consuming apparatus according to an embodiment of this application includes the foregoing cylindrical battery.

In the power-consuming apparatus according to this embodiment of this application, the foregoing cylindrical battery is disposed, the foregoing wound cell is disposed, the foregoing electrode sheet is disposed, and the plurality of first tabs are all disposed in the first region. The two ends of the body in the length direction are the first end and the second end. The first region is located at the first end. In the direction from the first end to the second end, the widths of the plurality of first tabs in the length direction of the body gradually decrease. This ensures the current-carrying capability of the wound cell, and improves an overall bending degree of the first tabs in the first region, thereby improving production efficiency.

Additional aspects and advantages of this application are partially presented in the following descriptions, partially become clear in the following descriptions, or are understood through practice of this application.

### BRIEF DESCRIPTION OF DRAWINGS

The above and/or additional aspects and advantages of this application will become apparent and easily understood from descriptions of embodiments with reference to the following drawings, in which:
FIG. 1 is a top view of an expanded electrode sheet according to an embodiment of this application, showing that a first angle of a first tab gradually increases;
FIG. 2 is a top view of an expanded electrode sheet according to an embodiment of this application, showing that a first angle of a first tab remains unchanged;
FIG. 3 is a diagram of an expanded electrode sheet according to an embodiment of this application; and
FIG. 4 is a cross-sectional view in which a tab of an electrode sheet is connected to a current collector according to an embodiment of this application.

### Reference numerals:

100: electrode sheet;
10: body;
1: coated part;
2: tab part; 21: first region; 211: first tab; 22: second region; 221: second tab; 23: tab;
3: first end;
4: second end;
5: uncoated foil buffer part;
20: mandrel hole;
30: current collector.

### DESCRIPTION OF EMBODIMENTS

Embodiments of this application are described in detail below, examples of which are shown in the accompanying drawings, where the same or similar reference numerals represent the same or similar elements or elements having the same or similar functions throughout. Embodiments described below with reference to the accompanying drawings are examples and are merely used to explain this application, and will not be construed as limiting this application.

In the descriptions of this application, it will be understood that an orientation or positional relationship indicated by the term "center", "longitudinal", "transverse", "length", "width", "thickness", "above", "beneath", "front", " back", "left", "right", "vertical", "horizontal", "top", "bottom", "internal", "external", "clockwise", "counterclockwise", "axial direction", "radial direction", "circumferential direction", or the like is based on an orientation or positional relationship shown in the accompanying drawings, and is merely for ease of describing this application and simplifying description, but does not indicate or imply that an apparatus or an element referred to must have a specific orientation or be constructed and operated in a specific orientation, and therefore will not be understood as a limitation on this application. In addition, features modified by "first" and "second" may explicitly or implicitly include one or more features. In the descriptions of this application, unless otherwise specified, "a plurality of" means two or more.

In descriptions of this application, it will be noted that unless otherwise expressly specified and limited, terms "mount", "interconnect", and "connect" will be understood in a broad sense. For example, such terms may indicate a fixed connection, a detachable connection, or an integral connection; may indicate a mechanical connection or an electrical connection; and may indicate direct interconnection, indirect interconnection through an intermediate medium, or internal communications between two elements. For a person of ordinary skill in the art, a specific meaning of the foregoing terms in this application will be understood based on a specific situation.

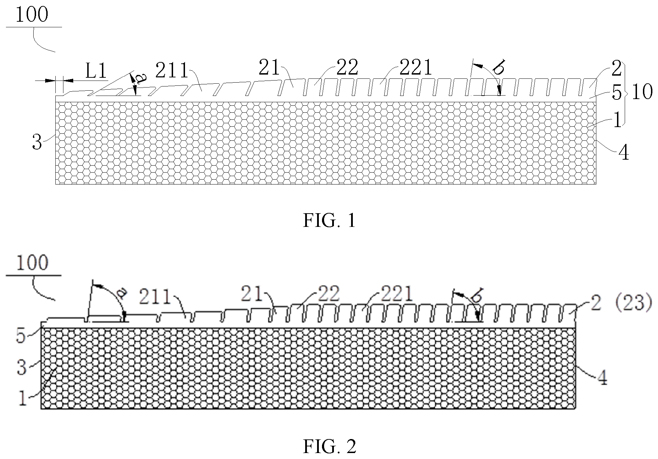

The following describes an electrode sheet 100 according to an embodiment of this application with reference to FIG. 1 to FIG. 4.

As shown in FIG. 1 and FIG. 2, the electrode sheet 100 according to this embodiment of this application includes a body 10.

Specifically, referring to FIG. 1 and FIG. 2, the body 10 includes a coated part 1 and a tab part 2 in a width direction of the body 10. The tab part 2 includes a plurality of tabs 23 disposed in a length direction of the body 10, and each of the tabs 23 is connected to the coated part 1. Two ends of the body 10 in the length direction are a first end 3 and a second end 4. The tab part 2 includes a first region 21 located at the first end 3 in a direction from the first end 3 to the second end 4. A plurality of tabs 23 located in the first region 21 are all first tabs 211.

It will be understood that, the coated part 1 is coated with an active material. During discharge of the electrode sheet 100, the active material in the coated part 1 is soaked in electrolyte. The plurality of tabs 23 are connected to a current collector 30 in the width direction of the body 10, forming a wound cell. The electrolyte reacts with the active material in the coated part 1 to generate a current, thereby implementing a discharge process of the wound cell.

The electrode sheet 100 is wound around a winding center from the first end 3 to the second end 4, then the plurality of tabs 23 are pre-bent (the tabs 23 are bent toward the winding center), and then the tabs 23 are flattened to form the wound cell. Finally, the current collector 30 is connected to the tabs 23, for example, by welding. In this process, a tab 23 laps over a tab 23 of a previous turn to form an overlapping region. When the current collector 30 is connected to the tabs 23, there is a need to ensure a specific thickness (a thickness in the width direction of the body 10) of an overlapping region of tabs 23, to avoid structural damage to the electrode sheet 100 during the connection such as welding, and to improve connection reliability. Therefore, a thinner overlapping region of the tabs 23 indicates higher connection difficulty.

The plurality of first tabs 211 are disposed in the first region 21, to increase a quantity of overlapping regions of the first tabs 211, so that a thickness of the overlapping regions of the first tabs 211 can be increased, thereby ensuring that the current collector 30 may be connected to the first tabs 211. The current collector 30 is connected to the plurality of first tabs 211, so that a connection area between the current collector 30 and the tab part 2 can be increased, thereby improving a current-carrying capability of the wound cell. In addition, because the overlapping regions of the first tabs 211 are thick, difficulty of connecting the current collector 30 and the tab 23 is also reduced.

Further, as shown in FIG. 1 and FIG. 2, in the direction from the first end 3 to the second end 4, widths of the plurality of first tabs 211 in the length direction of the body 10 gradually decrease. It will be understood that, because the winding center is disposed close to the first end 3 relative to the second end 4, to avoid interference between the winding center and a bent first tab 211, a height of a first tab 211 closer to the first end 3 in the width direction of the body 10 is smaller. In addition, to ensure a connection area between the current collector 30 and a first tab 211 close to the first end 3, a width of the first tab 211 close to the first end 3 in the length direction of the body 10 needs to be increased. Therefore, a width of a first tab 211 closest to the first end 3 in the length direction of the body 10 is the largest. In the direction from the first end 3 to the second end 4, the widths of the plurality of first tabs 211 in the length direction of the body 10 gradually decrease, and bending degrees of the plurality of first tabs 211 also gradually increase, thereby improving an overall bending degree of the first tabs 211 in the first region 21, and improving production efficiency.

Therefore, in the direction from the first end 3 to the second end 4, the widths of the plurality of first tabs 211 in the length direction of the body 10 gradually decrease. This ensures the current-carrying capability of the wound cell, and improves an overall bending degree of the first tabs 211 in the first region 21, thereby improving production efficiency.

In the electrode sheet 100 in this embodiment of this application, the plurality of first tabs 211 are disposed in the first region 21. The two ends of the body 10 in the length direction are the first end 3 and the second end 4. The first region 21 is located at the first end 3. In the direction from the first end 3 to the second end 4, the widths of the plurality of first tabs 211 in the length direction of the body 10 gradually decrease. This ensures the current-carrying capability of a wound cell, and improves an overall bending degree of the first tab 211 in the first region 21, thereby improving production efficiency.

In some embodiments of this application, as shown in FIG. 1 and FIG. 2, a distance L1 between the first end 3 and the first tab 211 closest to the first end 3 ranges from 0 mm to 1 mm, for example, 0 mm, 0.2 mm, 0.5 mm, or 1 mm. In this case, coverage of the tabs 23 in the length direction of the body 10 of the electrode sheet 100, so that an area of a region in which the flattened tabs 23 cover the wound cell is increased, and the current collector 30 may be connected to more tabs 23, thereby improving the current-carrying capability of the wound cell.

The distance between the first end 3 and the first tab 211 closest to the first end 3 means a distance between the first end 3 and an edge of two opposite edges of the first tab 211 closest to the first end 3 in the length direction of the body 10 that is close to the first end 3.

In some embodiments of this application, as shown in FIG. 1 and FIG. 2, in the direction from the first end 3 to the second end 4, heights of the plurality of first tabs 211 in the width direction of the body 10 gradually increase. In the direction from the first end 3 to the second end 4, the heights of the plurality of first tabs 211 in the width direction of the body 10 gradually increase, so that a coverage area of the flattened first tabs 211 in the wound cell is increased. Therefore, the current collector 30 may be connected to more tabs 23, thereby improving the current-carrying capability of the wound cell.

In addition, in the direction from the first end 3 to the second end 4, the heights of the plurality of first tabs 211 in the width direction of the body 10 gradually increase. In this case, a height of the first tab 211 closest to the first end 3 is the smallest. Therefore, this can avoid structural interference between the first tabs 211 and the winding center when the first tabs 211 are bent.

In some embodiments of this application, as shown in FIG. 1 and FIG. 2, the first tabs 211 are inclined toward the second end 4 in the direction from the coated part 1 to the tab part 2. It will be understood that, with a same area of the first tabs 211, coverage of the first tabs 211 in the length direction of the body 10 of the electrode sheet 100 is greater when the first tabs 211 are inclined toward the second end 4 in the direction from the coated part 1 to the tab part 2 than when the first tabs extend in the direction from the coated part to the tab part. This increases an area of the region in which the flattened tabs 23 cover the wound cell, thereby improving the current-carrying capability of the wound cell.

In some embodiments of this application, as shown in FIG. 1 and FIG. 2, in the direction from the coated part 1 to the tab part 2, two opposite edges of the first tab 211 in the length direction of the body 10 are both inclined toward the second end 4 at a same inclination angle. It will be understood that, with the same area of the first tabs 211, in the direction from the coated part 1 to the tab part 2, the coverage of the first tabs 211 in the length direction of the body 10 of the electrode sheet 100 is greater when the two opposite edges of the first tab 211 in the length direction of the body are both inclined toward the second end 4 than in the direction from the coated part to the tab part, when the two opposite edges of the first tab in the length direction of the body 10 both extend toward the direction from the coated part to the tab part. This increases the area of the region in which the flattened tabs 23 cover the wound cell, thereby improving the current-carrying capability of the wound cell. In addition, in the direction from the coated part 1 to the tab part 2, the two opposite edges of the first tab 211 in the length direction of the body 10 are inclined toward the second end 4 at the same inclination angle. This simplifies a structure and improves production efficiency.

In some embodiments of this application, as shown in FIG. 1, in the direction from the first end 3 to the second end 4, an edge at one end of the first tab 211 that is away from the coated part 1 is inclined toward a direction away from the coated part 1. It will be understood that, in comparison with a case in which the edge at the end of the first tab that is away from the coated part is parallel to opposite edges at two ends of the coated part in the width direction of the body, in the case in which in the direction from the first end 3 to the second end 4, the edge at one end of the first tab 211 that is away from the coated part 1 is inclined toward the direction away from the coated part 1, heights of the first tabs 211 in the width direction of the body 10 are larger. This further increases the area of the region in which the flattened tabs 23 cover the wound cell, thereby improving the current-carrying capability of the wound cell.

In some embodiments of this application, as shown in FIG. 1, an angle between the length direction of the body 10 and an edge of two opposite edges of the first tab 211 in the length direction of the body 10 that is close to the first end 3 is a first angle; and first angles of the plurality of first tabs 211 in the direction from the first end 3 to the second end 4 gradually increase. This helps gradually increase the heights of the plurality of first tabs 211 in the width direction of the body 10. This can increase coverage of the flattened tabs 23 in the wound cell, thereby improving the current-carrying capability of the wound cell.

In some embodiments of this application, as shown in FIG. 1, a first angle a of the first tab 211 closest to the first end 3 ranges from 20° to 30°, for example, 20°, 25°, or 30°. Therefore, the first angle of the first tab 211 closest to the first end 3 can meet a product design requirement, and an angle between the length direction of the body 10 and the first tab 211 closest to the first end 3 may be appropriate. This avoids structural interference between the winding center and the first tab 211 closest to the first end 3 caused by an excessively large height of the first tab 211 closest to the first end 3 in the width direction of the body 10 due to an excessively large first angle. In addition, this can avoid an excessively small height of the first tab 211 closest to the first end 3 in the width direction of the body 10 due to an excessively small first angle, which is otherwise unfavorable for bending and flattening of the first tabs 211.

In some embodiments of this application, as shown in FIG. 1, the first angles of the plurality of first tabs 211 in the direction from the first end 3 to the second end 4 increase linearly. Therefore, during a product design, adjusting a length of an oblique edge of a corresponding first angle a based on the increasing first angles allows for a gradual increase in the heights of the multiple first tabs 211 in the width direction of the body 10, thereby reducing product design difficulty. In addition, after the plurality of first tabs 211 are bent and flattened, edges facing toward the winding center are smoother, so that the thickness of the overlapping regions of the tabs 23 is more uniform, facilitating the connection between the tabs 23 and the current collector 30.

In some embodiments of this application, as shown in FIG. 1, a difference between first angles of two adjacent first tabs 211 ranges from 0.1° to 5°, for example, 0.1°, 1°, 2°, or 5°. This can prevent a height difference between the two adjacent first tabs 211 in the width direction of the body 10 from being excessively small or large due to an excessively small or large difference in first angles between the two adjacent first tabs 211. In this way, the heights of the two adjacent first tabs 211 in the width direction of the body 10 change to some extent, so that coverage of the flattened tabs 23 in the wound cell can be increased, thereby improving the current-carrying capability of the wound cell. In addition, this can prevent the heights of the two adjacent first tabs 211 in the width direction of the body 10 from excessively changing, so that the thickness of the overlapping regions of the tabs 23 is more uniform, facilitating welding.

In some embodiments of this application, as shown in FIG. 2, an edge at one end of the first tab 211 that is away from the coated part 1 is parallel to the length direction of the body 10. This simplifies a structure of the first tab 211 and improves production efficiency.

In some embodiments of this application, as shown in FIG. 2, an angle between the length direction of the body 10 and an edge of two opposite edges of the first tab 211 in the length direction of the body 10 that is close to the first end 3 is a first angle a; and first angles of the plurality of first tabs 211 in the direction from the first end 3 to the second end 4 are equal. This simplifies the structure of the first tab 211 and improves production efficiency.

In some embodiments of this application, as shown in FIG. 2, in the direction from the first end 3 to the second end 4, the heights of the plurality of first tabs 211 in the width direction of the body 10 linearly increase. In the direction from the first end 3 to the second end 4, this helps gradually increase the heights of the plurality of first tabs 211 in the width direction of the body 10, so that coverage of the flattened tabs 23 in the wound cell can be increased, thereby improving the current-carrying capability of the wound cell. In addition, the heights linearly increase, thereby reducing the product design difficulty. In addition, after the plurality of first tabs 211 are bent and flattened, the edges facing toward the winding center are smoother, so that the thickness of the overlapping regions of the tabs 23 is more uniform, facilitating welding.

In some embodiments of this application, as shown in FIG. 2, a height of the first tab 211 closest to the first end 3 in the width direction of the body 10 ranges from 0.5 mm to 1.5 mm, for example, 0.5 mm, 0.8 mm, 1 mm, 1.2 mm, or 1.5 mm. It will be understood that, if the height of the first tab 211 closest to the first end 3 in the width direction of the body 10 is excessively small, the first tab 211 closest to the first end 3 is not easily bent and flattened, thereby reducing the production efficiency. However, if the height of the first tab 211 closest to the first end 3 in the width direction of the body 10 is excessively large, the bent first tab 211 closest to the first end 3 is likely to interfere with the winding center.

Therefore, the height of the first tab 211 closest to the first end 3 in the width direction of the body 10 ranges from 0.5 mm to 1.5 mm, so that the height of the first tab 211 closest to the first end 3 in the width direction of the body 10 is appropriate. In this way, the first tab 211 closest to the first end 3 is easily bent, and the bent first tab 211 closest to the first end 3 is prevented from interfering with the winding center.

In some embodiments of this application, as shown in FIG. 2, a difference between heights of two adjacent first tabs 211 in the width direction of the body 10 ranges from 0.05 mm to 0.5 mm, for example, 0.05 mm, 0.1 mm, 0.2 mm, or 0.5 mm. This can prevent a height difference between the two adjacent first tabs 211 in the width direction of the body 10 from being excessively small or large. In this way, the heights of the two adjacent first tabs 211 in the width direction of the body 10 change to some extent, so that coverage of the flattened tabs 23 in the wound cell can be increased, thereby improving the current-carrying capability of the wound cell. In addition, this can prevent the heights of the two adjacent first tabs 211 in the width direction of the body 10 from excessively changing, so that the thickness of the overlapping regions of the tabs 23 is more uniform, facilitating welding.

In some embodiments of this application, as shown in FIG. 1 and FIG. 2, in the direction from the first end 3 to the second end 4, the widths of the plurality of first tabs 211 in the length direction of the body 10 decrease linearly. This makes a structure of the plurality of first tabs 211 more regular, helping improve production efficiency.

For example, in the example shown in FIG. 1, in the direction from the first end 3 to the second end 4, a range in which the widths of the plurality of first tabs 211 in the length direction of the body 10 linearly decrease ranges from 0.05 mm to 0.5 mm, for example, 0.05 mm, 0.1 mm, 0.2 mm, or 0.5 mm. In the example shown in FIG. 2, in the direction from the first end 3 to the second end 4, the range in which the widths of the plurality of first tabs 211 in the length direction of the body 10 decrease linearly ranges from 0.2 mm to 20 mm, for example, 0.2 mm, 1 mm, 5 mm, or 20 mm.

In some embodiments of this application, as shown in FIG. 1 and FIG. 2, a width of a first tab 211 closest to the first end 3 in the length direction of the body 10 ranges from 10 mm to 100 mm, for example, 10 mm, 20 mm, 50 mm, or 100 mm. It will be understood that, if the width of the first tab 211 closest to the first end 3 in the length direction of the body 10 is excessively small, because in the direction from the first end 3 to the second end 4, the widths of the plurality of first tabs 211 in the length direction of the body 10 linearly decrease, the widths of the first tabs 211 in the length direction of the body 10 are excessively small, which is otherwise unfavorable for the connection between the first tabs 211 and the current collector 30. However, if the width of the first tab 211 closest to the first end 3 in the length direction of the body 10 is excessively large, the first tab 211 closest to the first end 3 is less prone to bending, thereby reducing production efficiency.

Therefore, the width of the first tab 211 closest to the first end 3 in the length direction of the body 10 ranges from 10 mm to 100 mm. This ensures the widths of the first tabs 211 in the length direction of the body 10, facilitating the connection to the current collector 30, and allows the first tab 211 closest to the first end 3 to be easily bent, improving production efficiency.

In some embodiments of this application, as shown in FIG. 1 to FIG. 3, the tab part 2 further includes a second region 22, the second region 22 is located on a side of the first region 21 that is close to the second end 4, a plurality of tabs 23 located in the second region 22 are all second tabs 221, and the plurality of second tabs 221 have a same shape and size. It will be understood that, if the plurality of second tabs 221 have the same shape and size, heights of the plurality of second tabs 221 in the width direction of the body 10 are the same, and a height of a first wound second tab 221 is less than or equal to a distance between the first wound second tab 221 and an edge of the winding center. When the electrode sheet 100 continues to be wound, the flattened second tabs 221 do not extend into the winding center subsequently. In addition, at this moment, circumference of the winding center is fully covered by tabs 23. Therefore, the equal heights of the second tabs 221 can meet a requirement that the tabs 23 cover end parts at two ends of the wound cell in the width direction of the body 10, and ensure that the flattened second tabs 221 do not interfere with the winding center. In addition, the same shape and size of the plurality of second tabs 221 can reduce process difficulty and production costs.

In some embodiments of this application, as shown in FIG. 1 and FIG. 2, a width of the second tab 221 in the length direction of the body 10 ranges from 2 mm to 6 mm, for example, 2 mm, 3 mm, 4 mm, or 6 mm. This ensures the width of the second tab 221 in the length direction of the body 10, facilitating the connection to the current collector 30, and allows the second tab 221 to be easily bent, improving production efficiency.

Further, as shown in FIG. 1 and FIG. 2, a height of the second tab 221 in the width direction of the body 10 ranges from 4 mm to 8 mm, for example, 4 mm, 5 mm, 6 mm, or 8 mm. Therefore, the height of the second tab 221 in the width direction of the body 10 is appropriate. In this way, the second tab 221 is easily bent, and the bent second tab 221 is prevented from interfering with the winding center.

In some embodiments of this application, as shown in FIG. 1 and FIG. 2, the second tabs 221 are inclined toward the second end 4 in the direction from the coated part 1 to the tab part 2. It will be understood that, with a same area of the second tabs 221, coverage of the second tabs 221 in the length direction of the body 10 of the electrode sheet 100 is greater when the second tabs 221 are inclined toward the second end 4 in the direction from the coated part 1 to the tab part 2 than when the first tabs extend in the direction from the coated part to the tab part. This increases an area of the region in which the flattened tabs 23 cover the wound cell, thereby improving the current-carrying capability of the wound cell.

In some embodiments of this application, as shown in FIG. 1 and FIG. 2, an angle b between the length direction of the body 10 and an edge of two opposite edges of the second tab 221 and the first tab 211 in the length direction of the body 10 that is close to the first end 3 ranges from 2° to 20°, for example, 2°, 5°, 10°, or 20°. Therefore, the angle between the length direction of the body 10 and the edge of the two opposite edges of the second tab 221 and the first tab 211 in the length direction of the body 10 that is close to the first end 3 is appropriate. This avoids structural interference between the winding center and the second tab 221 caused by an excessively large height of the second tab 221 in the width direction of the body 10 due to an excessively large angle. In addition, this can avoid an excessively small height of the second tab 221 in the width direction of the body 10 due to an excessively small angle, which is otherwise unfavorable for bending and flattening of the second tabs 221.

In some embodiments of this application, as shown in FIG. 1 and FIG. 2, in the length direction of the body 10, a maximum width of the first tab 211 is less than or equal to 20 times a width of the second tab 221. It will be understood that, in the length direction of the body 10, if the maximum width of the first tab 211 is greater than 20 times the width of the second tab 221, the width of the first tab 211 is excessively large or the width of the second tab 221 is excessively small in the length direction of the body 10. If the maximum width of the first tab 211 in the length direction of the body 10 is excessively large, which is otherwise unfavorable for bending and flattening of a first tab 211 close to the first end 3, and production efficiency is low. If the width of the second tab 221 in the length direction of the body 10 is excessively small, it is unfavorable for the connection between the second tabs 221 and the current collector 30.

Therefore, in the length direction of the body 10, the width of the first tab 211 is less than or equal to 20 times the width of the second tab 221. This facilitates bending and flattening of the first tab 211, improves production efficiency, and facilitates the connection between the second tabs 221 and the current collector 30.

In some embodiments of this application, as shown in FIG. 1 and FIG. 2, in the length direction of the body 10, a spacing between edges of two adjacent tabs 23 that are close to each other in the length direction of the body 10 ranges from 0.05 mm to 2 mm, for example, 0.05 mm, 0.15 mm, 0.10 mm, or 2 mm. It will be understood that, in the length direction of the body 10, if the spacing between the edges of the two adjacent tabs 23 that are close to each other in the length direction of the body 10 is excessively small, the tabs 23 are not easily bent, thereby reducing production efficiency. In the length direction of the body 10, if the spacing between the edges of the two adjacent tabs 23 that are close to each other in the length direction of the body 10 is excessively large, coverage of the tabs 23 in the length direction of the body 10 is excessively small, thereby reducing the current-carrying capability of the wound cell.

Therefore, in the length direction of the body 10, the spacing between the edges of the two adjacent tabs 23 that are close to each other in the length direction of the body 10 ranges from 0.05 mm to 2 mm, so that a spacing between the two adjacent tabs 23 is appropriate. This facilitates bending of the tabs 23, and ensures production efficiency, the coverage of the tabs 23 in the length direction of the body 10, and the current-carrying capability of the wound cell.

In some embodiments of this application, as shown in FIG. 1 and FIG. 2, the body 10 further includes an uncoated foil buffer part 5 in the width direction of the body 10, and the uncoated foil buffer part 5 is located between the coated part 1 and the tab part 2. It will be understood that, the uncoated foil buffer part 5 may change a shape to some extent. When the tab part 2 and the current collector 30 are connected in the width direction of the body 10, to reduce a connection gap between the tab part 2 and the current collector 30, the uncoated foil buffer part 5 changes the shape, to allow end faces of the tab part 2 and the current collector 30 to be parallel to each other. This reduces the connection gap between the tab part 2 and the current collector 30, and improves connection reliability between the tab part 2 and the current collector 30, thereby improving the current-carrying capability of the wound cell.

The following describes a wound cell according to an embodiment of this application

The wound cell according to this embodiment of this application includes a positive electrode sheet, a negative electrode sheet, and a separator, where the positive electrode sheet and the negative electrode sheet are stacked and wound in a length direction of the positive electrode sheet and the negative electrode sheet, the separator is disposed between the positive electrode sheet and the negative electrode sheet; at least one of the positive electrode sheet and the negative electrode sheet is the foregoing electrode sheet 100.

It will be understood that, the positive electrode sheet and the negative electrode sheet are insulated by using the separator, to avoid the positive electrode sheet and the negative electrode sheet from being short-circuited, and the at least one of the positive electrode sheet and the negative electrode sheet is the foregoing electrode sheet 100, for example, each of the positive electrode sheet and the negative electrode sheet is the foregoing electrode sheet 100, or the positive electrode sheet is the foregoing electrode sheet 100, and the negative electrode sheet is not the foregoing electrode sheet 100, or the negative electrode sheet is the foregoing electrode sheet 100, and the positive electrode sheet 100 is not the foregoing electrode sheet, thereby improving the current-carrying capability of the wound cell. In addition, tabs 23 on the positive electrode sheet and tabs 23 on the negative electrode sheet are respectively located at two ends of the body 10 in the width direction, thereby preventing the tabs 23 on the positive electrode sheet and the tabs 23 on the negative electrode sheet from being short-circuited.

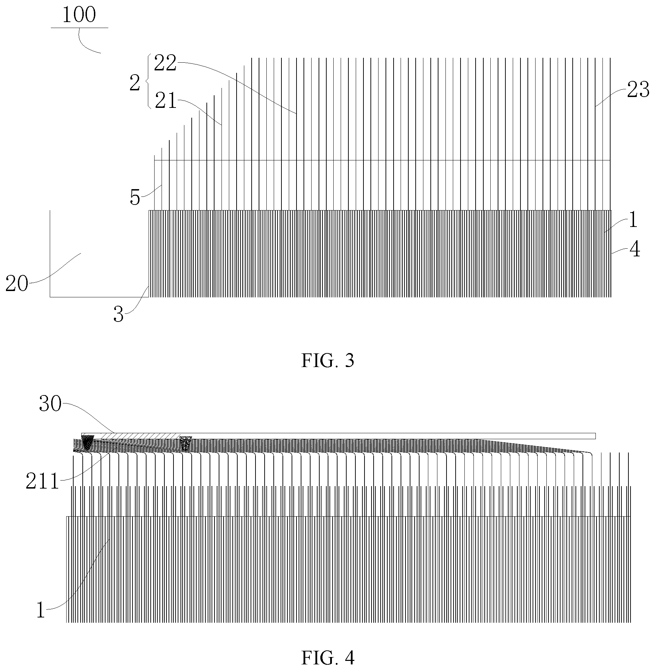

Further, as shown in FIG. 3, a mandrel hole 20 is provided inside the wound cell, the first end 3 is disposed close to the mandrel hole 20 relative to the second end 4, tabs 23 are all bent toward the mandrel hole 20, and one ends of the plurality of first tabs 211 that face the mandrel hole 20 are flush with surrounding walls of the mandrel hole 20 or located on a radial outer side of the mandrel hole 20. The mandrel hole 20 is used for disposition of a winding mandrel, facilitating winding of the positive electrode sheet, the negative electrode sheet, and the separator. The ends of the plurality of first tabs 211 that face the mandrel hole 20 are flush with surrounding walls of the mandrel hole 20 or located on the radial outer side of the mandrel hole 20, so that the thickness of the overlapping regions of the tabs 23 is more uniform, facilitating the connection between the tabs 23 and the current collector 30. The foregoing winding center is the mandrel hole 20.

A manufacturing process of the wound cell is as follows: The positive electrode sheet, the negative electrode sheet, and the separator are stacked. Then, the positive electrode sheet, the negative electrode sheet, and the separator are wound around the mandrel hole 20 from the first end 3 to the second end 4. Then, the tabs 23 are bent toward the mandrel hole 20 and flattened, to complete manufacturing of the wound cell.

In the wound cell according to this embodiment of this application, the foregoing electrode sheet 100 is disposed, and the plurality of first tabs 211 are disposed in the first region 21. The two ends of the body 10 in the length direction are the first end 3 and the second end 4. The first region 21 is located at the first end 3. In the direction from the first end 3 to the second end 4, the widths of the plurality of first tabs 211 gradually decrease in the length direction of the body 10. This ensures a current-carrying capability of a wound cell, and improves an overall bending degree of the first tab 211 in the first region 21, thereby improving production efficiency.

In some embodiments of this application, as shown in FIG. 3 and FIG. 4, edges at one end of the plurality of first tabs 211 that faces the mandrel hole 20 are flush with each other. It will be understood that, after the plurality of first tabs 211 are bent, the edges at one end of the plurality of first tabs 211 that faces the mandrel hole 20 are flush with each other, so that coverage areas of all first tabs 211 are equal, and therefore the thickness of the overlapping regions of the tabs 23 is more uniform, facilitating the connection between the tabs 23 and the current collector 30.

The following describes a cylindrical battery according to an embodiment of this application.

The cylindrical battery according to this embodiment of this application includes the foregoing wound cell.

In the cylindrical battery according to this embodiment of this application, the foregoing wound cell is disposed, the foregoing electrode sheet 100 is disposed, and the plurality of first tabs 211 are disposed in the first region 21. The two ends of the body 10 in the length direction are the first end 3 and the second end 4. The first region 21 is located at the first end 3. In the direction from the first end 3 to the second end 4, the widths of the plurality of first tabs 211 gradually decrease in the length direction of the body 10. This ensures a current-carrying capability of a wound cell, and improves an overall bending degree of the first tab 211 in the first region 21, thereby improving production efficiency.

The following describes a power-consuming apparatus according to an embodiment of this application.

The power-consuming apparatus according to this embodiment of this application includes the foregoing cylindrical battery.

The following describes a production process of the cylindrical battery according to this embodiment of this application.

First, the electrode sheet 100 is die-cut based on a specified parameter, the tabs 23 and the uncoated foil buffer part 5 are die-cut on one side of the body 10 in the width direction based on the specified parameter, and then the electrode sheet 100 is wound. After winding is completed, the tabs 23 are pre-bent and then flattened. Then, the current collector 30 is welded to the plurality of flattened tabs 23, to complete the production process of the cylindrical battery.

In the power-consuming apparatus according to this embodiment of this application, the foregoing cylindrical battery is disposed, the foregoing wound cell is disposed, the foregoing electrode sheet 100 is disposed, and the plurality of first tabs 211 are disposed in the first region 21. The two ends of the body 10 in the length direction are the first end 3 and the second end 4. The first region 21 is located at the first end 3. In the direction from the first end 3 to the second end 4, the widths of the plurality of first tabs 211 gradually decrease in the length direction of the body 10. This ensures a current-carrying capability of a wound cell, and improves an overall bending degree of the first tab 211 in the first region 21, thereby improving production efficiency.

In the descriptions of this specification, the description with reference to the terms such as "an embodiment", "some embodiments", "an illustrative embodiment", "an example", "a specific example", or "some examples" means that a specific feature, a structure, a material, or a characteristic described with reference to the embodiment or example is included in at least one embodiment or example of this application. In this specification, example expressions of the foregoing terms do not necessarily mean a same embodiment or example. In addition, the described specific features, structures, materials, or characteristics may be combined in an appropriate manner in any one or more of embodiments or examples.

Although embodiments of this application are shown and described, a person of ordinary skill in the art may understand that various changes, modifications, replacements, and variations can be made to the embodiments, without departing from the principles and purposes of this application. The scope of this application is defined by the claims and their equivalents.

## Claims

1. An electrode sheet, comprising:
a body (10), wherein the body (10) comprises a coated part (1) and a tab part (2) in a width direction of the body (10), the tab part (2) comprises a plurality of tabs (23) disposed in a length direction of the body (10), and each of the tabs (23) is connected to the coated part (1); and
two ends of the body (10) in the length direction are a first end (3) and a second end (4); the tab part (2) comprises a first region (21) located at the first end (3) in a direction from the first end (3) to the second end (4); a plurality of tabs (23) located in the first region (21) are all first tabs (211); and in the direction from the first end (3) to the second end (4), widths of the plurality of first tabs (211) in the length direction of the body (10) gradually decrease.

2. The electrode sheet according to claim 1, wherein in the direction from the first end (3) to the second end (4), the widths of the plurality of first tabs (211) in the length direction of the body (10) linearly decrease.

3. The electrode sheet according to claim 2, wherein a width of a first tab (211) closest to the first end (3) in the length direction of the body (10) ranges from 10 mm to 100 mm.

4. The electrode sheet according to any one of claims 1 to 3, wherein a distance between the first end (3) and the first tab (211) closest to the first end (3) ranges from 0 mm to 1 mm.

5. The electrode sheet according to any one of claims 1 to 4, wherein in the direction from the first end (3) to the second end (4), heights of the plurality of first tabs (211) in the width direction of the body (10) gradually increase.

6. The electrode sheet according to claim 5, wherein the first tabs (211) are inclined toward the second end (4) in a direction from the coated part (1) to the tab part (2).

7. The electrode sheet according to claim 6, wherein in the direction from the coated part (1) to the tab part (2), two opposite edges of the first tab (211) in the length direction of the body (10) are both inclined toward the second end (4) at a same inclination angle.

8. The electrode sheet according to claim 6, wherein in the direction from the first end (3) to the second end (4), an edge at one end of the first tab (211) that is away from the coated part (1) is inclined toward a direction away from the coated part (1).

9. The electrode sheet according to claim 6, wherein an angle between the length direction of the body (10) and an edge of two opposite edges of the first tab (211) in the length direction of the body (10) that is close to the first end (3) is a first angle; and first angles of the plurality of first tabs (211) in the direction from the first end (3) to the second end (4) gradually increase.

10. The electrode sheet according to claim 9, wherein a first angle of the first tab (211) closest to the first end (3) ranges from 20° to 30°.

11. The electrode sheet according to claim 9, wherein the first angles of the plurality of first tabs (211) in the direction from the first end (3) to the second end (4) linearly increase.

12. The electrode sheet according to claim 9, wherein a difference between first angles of two adjacent first tabs (211) ranges from 0.1° to 5°.

13. The electrode sheet according to claim 6, wherein an edge at one end of the first tab (211) that is away from the coated part (1) is parallel to the length direction of the body (10).

14. The electrode sheet according to claim 13, wherein an angle between the length direction of the body (10) and an edge of two opposite edges of the first tab (211) in the length direction of the body (10) that is close to the first end (3) is a first angle; and first angles of the plurality of first tabs (211) in the direction from the first end (3) to the second end (4) are equal.

15. The electrode sheet according to claim 13, wherein in the direction from the first end (3) to the second end (4), the heights of the plurality of first tabs (211) in the width direction of the body (10) linearly increase.

16. The electrode sheet according to claim 15, wherein a height of the first tab (211) closest to the first end (3) in the width direction of the body (10) ranges from 0.5 mm to 1.5 mm.

17. The electrode sheet according to claim 13, wherein a difference between heights of two adjacent first tabs (211) in the width direction of the body (10) ranges from 0.05 mm to 0.5 mm.

18. The electrode sheet according to any one of claims 1 to 17, wherein the tab part (2) further comprises a second region (22), the second region (22) is located on a side of the first region (21) that is close to the second end (4), a plurality of tabs (23) located in the second region (22) are all second tabs (221), and the plurality of second tabs (221) have a same shape and size.

19. The electrode sheet according to claim 18, wherein a width of the second tab (221) in the length direction of the body (10) ranges from 2 mm to 6 mm; and/or
a height of the second tab (221) in the width direction of the body (10) ranges from 4 mm to 8 mm.

20. The electrode sheet according to claim 18, wherein the second tabs (221) are inclined toward the second end (4) in the direction from the coated part (1) to the tab part (2).

21. The electrode sheet according to claim 20, wherein an angle between the length direction of the body (10) and an edge of two opposite edges of the second tab (221) in the length direction of the body (10) that is close to the first end (3) ranges from 2° to 20°.

22. The electrode sheet according to claim 18, wherein in the length direction of the body (10), a maximum width of the first tab (211) is less than or equal to 20 times a width of the second tab (221).

23. The electrode sheet according to any one of claims 1 to 22, wherein a spacing between edges of two adjacent tabs (23) that are close to each other in the length direction of the body (10) ranges from 0.05 mm to 2 mm.

24. The electrode sheet according to any one of claims 1 to 23, wherein the body (10) further comprises an uncoated foil buffer part (5) in the width direction of the body (10), and the uncoated foil buffer part (5) is located between the coated part (1) and the tab part (2).

25. A wound cell, comprising:
a positive electrode sheet, a negative electrode sheet, and a separator, wherein the positive electrode sheet and the negative electrode sheet are stacked and wound in a length direction of the positive electrode sheet and the negative electrode sheet, the separator is disposed between the positive electrode sheet and the negative electrode sheet; at least one of the positive electrode sheet and the negative electrode sheet is the electrode sheet according to any one of claims 1 to 24; and
a mandrel hole (20) is provided inside the wound cell, the first end (3) is disposed close to the mandrel hole (20) relative to the second end (4), and tabs (23) are all bent toward the mandrel hole (20).

26. The wound cell according to claim 25, wherein edges at one end of the plurality of first tabs (211) that faces the mandrel hole (20) are flush with each other.

27. A cylindrical battery, comprising the wound cell according to claim 25 or 26.

28. A power-consuming apparatus, comprising the cylindrical battery according to claim 27.
